(19) Europäisches Patentamt / European Patent Office / Office européen des brevets

(11) **EP 3 006 978 B1**

(12) **EUROPEAN PATENT SPECIFICATION**

(45) Date of publication and mention
of the grant of the patent:
**25.09.2019  Bulletin 2019/39**

(51) Int Cl.:
***G02B 19/00*** *(2006.01)*

(21) Application number: **15188224.8**

(22) Date of filing: **02.10.2015**

(54) **LIGHT-EMITTING DEVICE, BACKLIGHT UNIT INCLUDING THE DEVICE, AND DISPLAY APPARATUS INCLUDING THE UNIT**

LICHTEMITTIERENDE VORRICHTUNG, RÜCKBELEUCHTUNGSEINHEIT MIT DER VORRICHTUNG UND ANZEIGEVORRICHTUNG MIT DER EINHEIT

DISPOSITIF ÉLECTROLUMINESCENT, UNITÉ DE RÉTROÉCLAIRAGE COMPRENANT LEDIT DISPOSITIF ET APPAREIL D'AFFICHAGE COMPRENANT CETTE UNITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.10.2014  KR 20140135021**

(43) Date of publication of application:
**13.04.2016  Bulletin 2016/15**

(73) Proprietor: **LG Innotek Co., Ltd.**
**Seoul, 04637 (KR)**

(72) Inventor: **JUNG, Jae Wook**
**Seoul 04637 (KR)**

(74) Representative: **Cabinet Plasseraud**
**66, rue de la Chaussée d'Antin**
**75440 Paris Cedex 09 (FR)**

(56) References cited:
**KR-A- 20140 050 860      KR-A- 20140 089 318**
**US-A1- 2006 091 429      US-A1- 2013 088 857**

## Description

### TECHNICAL FIELD

Embodiments relate to a light-emitting device, a backlight unit including the device, and a display apparatus including the unit.

### BACKGROUND

A conventional light-emitting device including light-emitting diodes has a dome-shaped lens. At this time, the light-emitting device may problematically and undesirably emit light to a particular region surrounding the optical axis.

In addition, the light-emitting device may be applied to a backlight unit, and the backlight unit may be applied to a display apparatus.

The backlight unit may be divided into an edge-type backlight unit and a direct-type backlight unit based on the arrangement of a light source such as light-emitting diodes. In particular, the direct-type backlight unit may use light-emitting diodes for Lambertian light emission. Light emitted from the light-emitting diodes may spread by an optical sheet to thereby be directed to liquid crystals of the display apparatus. At this time, a lens, which is adopted in order to prevent the high intensity of light emitted from the light source from being viewed immediately above the liquid crystals, serves to increase the view angle of light emitted from the light-emitting diodes, thereby causing the light to be directed in the lateral direction. However, the conventional light-emitting device including the lens and the light-emitting diodes are configured to emit light only at a limited distance due to limitations in terms of the shape and size thereof.

The documents US 2013/088857, KR 2014 0050860, US 2006/091429 and KR 2014 0089318 each discloses a light emitting device having a light source and a lens.

### SUMMARY

Embodiments provide a light-emitting device, which has a small thickness, a wide fill width at half maximum and even illuminance, a backlight unit including the device, and a display apparatus including the unit.

In one embodiment, a light-emitting device includes a light source and a lens disposed above the light source, wherein the lens includes a lower part having a first recess formed in an optical-axis direction so as to face the light source, and an upper part having a second recess formed in the optical-axis direction so as to be opposite to the lower part, wherein the first recess and the second recess are spaced apart from each other by a separation distance within a range from 1 mm to 4.7 mm on an optical-axis direction.

In another embodiment, a light-emitting device includes a light source and a lens disposed above the light source, wherein the lens includes a lower part having a first recess formed in an optical-axis direction so as to face the light source, and an upper part having a second recess formed in the optical-axis direction so as to be opposite to the lower part, wherein a side surface of the lower part and the upper part includes an inclination angle within a range from -10° to +10°. The inclination angle of the side surface may be within a range from 0° to 10° .

For example, the inclination angle of the side surface may be within a range from 0° to 10°, the side surface may be flat, and the lens may have a thickness within a range from 4.5 mm to 7 mm.

For example, the first recess and the second recess may be symmetrical with respect to the optical axis in a direction intersected with the optical axis. The first recess may have a maximum width smaller than a maximum width of the second recess in a direction intersected with the optical-axis direction.

For example, a distance between a deepest point of the first recess and a light-emitting surface of the light source in the optical axis may be smaller than a maximum width of the first recess in a direction intersected with the optical-axis direction.

The first recess may include a first area having an increasing depth with decreasing distance to the optical axis, and a second area located around the perimeter of the first area, the second area having a constant depth.

For example, the lower part may include a first bottom portion having a first bottom surface defining the first recess, and a second bottom portion adjacent to the first bottom portion, the second bottom portion having a flat second bottom surface.

For example, the light source may have a top surface located under an imaginary horizontal plane extending from the second bottom surface, or located above the imaginary horizontal plane. At least a portion of the light source may be located inside the first recess.

For example, the first bottom surface may have a first radius of curvature suitable for refracting light, emitted from the light source and introduced thereto, toward a top surface of the lens defining the second recess, and the top surface of the lens may have a second radius of curvature suitable for reflecting the light, refracted at the first bottom surface, toward a side surface of the lens.

For example, a first angle between an optical axis and light emitted from the light source to thereby be introduced to the first bottom surface may be greater than a second angle between the optical axis and an extension line of light refracted at the first bottom surface to thereby be directed to a top surface of the lens.

In another embodiment, a backlight unit includes the light-emitting device, an upper plate disposed above the lens, and a lower plate disposed under the light source and the lens. For example, the upper plate may include at least one of a diffuser plate, a prism sheet, or a polarizer plate. The lower plate may include at least one of a reflective sheet, a printed circuit board, or a radiator plate. The backlight unit may have a thickness of 10 mm or less.

In a further embodiment, a display apparatus includes the backlight unit, and a display panel disposed at an upper side of the backlight unit.

## BRIEF DESCRIPTION OF THE DRAWINGS

Arrangements and embodiments may be described in detail with reference to the following drawings in which like reference numerals refer to like elements and wherein:

> FIGs. 1A and 1B are respectively a top perspective view and a bottom perspective view of a light-emitting device according to one embodiment;
> FIG. 2 is a sectional view of the light-emitting device taken along line I-I' illustrated in FIG. 1;
> FIG. 3 is a sectional view of a light-emitting device according to another embodiment;
> FIG. 4 is a sectional view of a backlight unit according to an embodiment;
> FIGs. 5A and 5B are graphs illustrating the area of an orthographic projection plane relative to the area of a light source;
> FIG. 6 is a graph illustrating the height of a lens relative to the area of the light source;
> FIG. 7 is a graph illustrating normalized total power relative to the thickness of the lens;
> FIG. 8 is a graph illustrating normalized total power relative to the vertical distance between first and second recesses on the optical axis;
> FIG. 9 is a graph illustrating normalized total power relative to the first angle;
> FIG. 10 is a graph illustrating the full width at half maximum relative to the first angle;
> FIG. 11 is a graph illustrating the thickness of the backlight unit relative to the fourth angle; and
> FIG. 12 is a perspective view schematically illustrating a display apparatus according to an embodiment.

## DESCRIPTION OF SPECIFIC EMBODIMENTS

Hereinafter, exemplary embodiments will be described in detail with reference to the accompanying drawings to aid in understanding of the embodiments. However, the embodiments may be altered in various ways, and the scope of the embodiments should not be construed as limited to the following description. The embodiments are intended to provide those skilled in the art with more complete explanation.

In the following description of the embodiments, it will be understood that, when each element is referred to as being formed "on" or "under" the other element, it can be directly "on" or "under" the other element or be indirectly formed with one or more intervening elements therebetween. In addition, it will also be understood that "on" or "under" the element may mean an upward direction and a downward direction of the element.

In addition, the relative terms "first", "second", "upper", "lower" and the like in the description and in the claims may be used to distinguish between any one substance or element and other substances or elements and not necessarily for describing any physical or logical relationship between the substances or elements or a particular order.

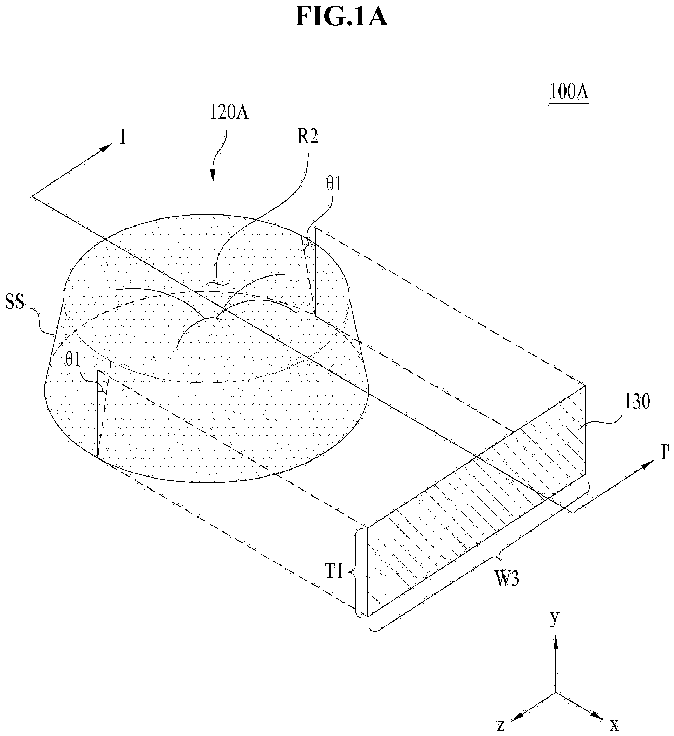

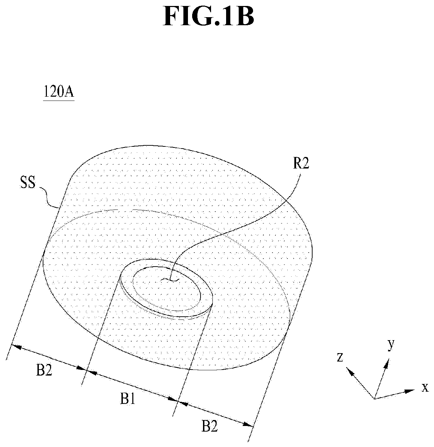

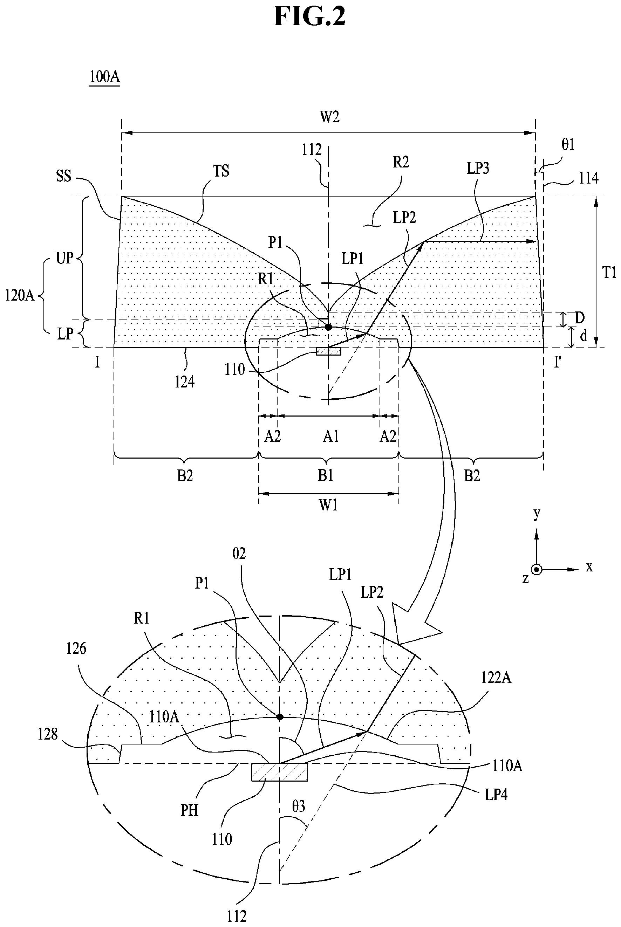

FIGs. 1A and 1B are respectively a top perspective view and a bottom perspective view of a light-emitting device 100A according to one embodiment, and FIG. 2 is a sectional view of the light-emitting device 100A taken along line I-I' illustrated in FIG. 1. For convenience of illustration, a light source 110 of the light-emitting device 100A illustrated in FIG. 2 is omitted in the light-emitting device 100A illustrated in FIGs. 1A and 1B.

Referring to FIG. 2, the light-emitting device 100A according to the embodiment includes the light source 110 and a lens 120A.

The light source 110 may include Light-Emitting Diodes (LEDs). For example, although the light source 110 including the LEDs may emit light at a view angle of about 120° surrounding the direction in which the light-emitting surface faces, the embodiment is not limited to the angle.

LED packages constituting the light source 110 may be divided into top-view type LED packages and side-view type LED packages based on the direction in which the light-emitting surface faces, and the present embodiment is not limited to this division.

In addition, the light source 110 may be comprised of colored LEDs or white LEDs, which emit light of at least one color among, for example, red, green, and blue. In addition, the colored LEDs may include at least one of red LEDs, blue LEDs, or green LEDs, and the light emitted from the LEDs may be changed within the technical range of the embodiment.

Referring to FIGs. 1A, 1B and 2, the lens 120A may be disposed on the light source 110, and may include an upper part UP and a lower part LP.

First, the lower part LP of the lens 120A may include a first recess R1. The first recess R1 may be formed in the direction of the optical axis 112 so as to face the light source 110.

In one embodiment, the first recess R1 may include a first area A1 and a second area A2. In the first area A1, the first recess R1 may have a greater depth with decreasing distance to the optical axis 112. Here, the depth is defined so as to increase with increasing distance from the light source 110. The second area A2 may be located at the perimeter of the first area A1 and may have a constant depth. That is, unlike the first area A1, although the first recess R1 may have a constant depth in the second area A2 regardless of the distance to the optical axis 112, the embodiment is not limited thereto.

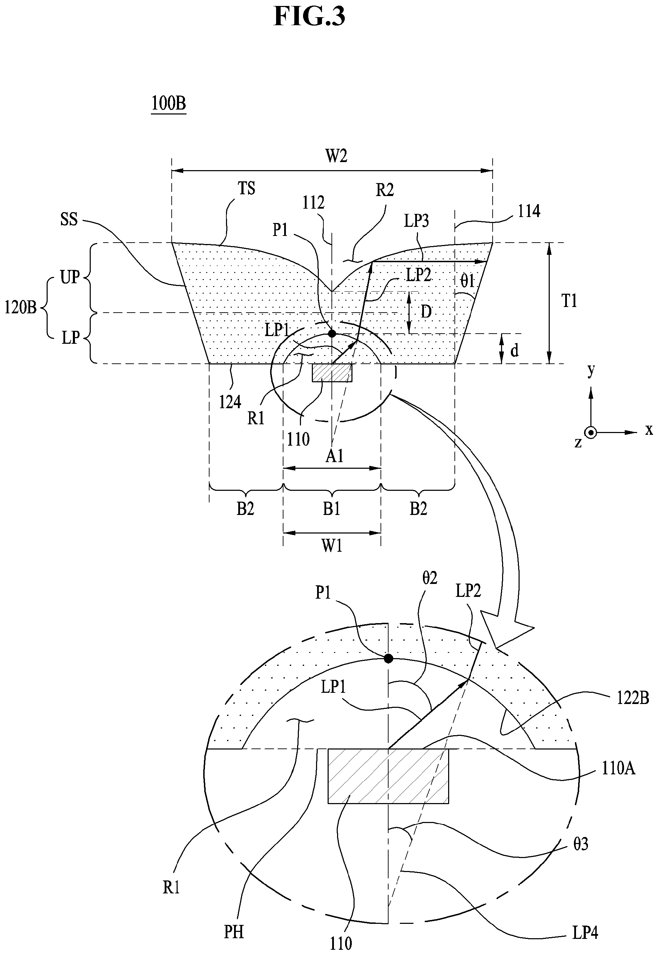

FIG. 3 is a sectional view of a light-emitting device 100B according to another embodiment.

The first recess R1 of the light-emitting device 100A illustrated in FIG. 2 includes the first area A1 and the second area A2, whereas the first recess R1 of the light-emitting device 100B illustrated in FIG. 3 includes only the first area A1 without including the second area A2.

In addition, in the light-emitting device 100A illustrated in FIG. 2, the side surface SS of the lens 120A may not be a vertical surface, but may be inclined by a first angle θ1 relative to an imaginary vertical line 114 parallel to the optical axis 112. Here, that the side surface SS of the lens 120A is a vertical surface means that the first angle θ1 is 0°.

In the following description, in the case where the upper part UP of the lens 120A has a smaller width W2 than the lower part LP, it may be defined that the first angle θ1 has a negative value. In addition, in the case where the upper part UP of the lens 120B has a greater width W2 than the lower part LP, it may be defined that the first angle θ1 has a positive value. Here, the width W2 of the upper part UP of the lens 120A or 120B may mean the minimum width or the maximum width of the upper part UP of the lens 120A or 120B, or the width of the top surface TS of the upper part UP of the lens 120A or 120B in the direction (e.g., the x-axis) intersected with the direction of the optical axis 112 (e.g., the y-axis). In addition, the width of the lower part LP of the lens 120A or 120B may mean the minimum width or the maximum width of the lower part LP of the lens 120A or 120B.

For example, the width W2 of the upper part UP of the lens 120A or 120B may mean, in the x-axis, the minimum width of the upper part UP of the lens 120A (or the width of the top surface TS of the upper part UP of the lens 120A) in the case of FIG. 2, and may mean, in the x-axis, the maximum width of the upper part UP of the lens 120B (or the width of the top surface TS of the upper part UP of the lens 120B) in the case of FIG. 3.

In addition, the width of the lower part LP of the lens 120A or 120B may mean, in the x-axis, the maximum width of the lower part LP of the lens 120A in the case of FIG. 2, and may mean, in the x-axis, the minimum width of the lower part LP of the lens 120B in the case of FIG. 3.

Hereinafter, although the width W2 of the upper part UP and the width of the lower part LP of the lens 120A or 120B have been described with reference to FIGs. 2 and 3, the embodiments are not limited thereto.

The light-emitting device 100B illustrated in FIG. 3 is identical to the light-emitting device 100A illustrated in FIG. 2 except for the above-described differences.

In addition, referring to FIGs. 2 and 3, the lower part LP of the lens 120A or 120B may include a first bottom portion B1 and a second bottom portion B2. The first bottom portion B1 illustrated in FIGs. 2 and 3 includes a first bottom surface 122A or 122B defining the first recess R1. The second bottom portion B2 includes a second bottom 124 which is flat and is adjacent to the first bottom portion B1. The first bottom portion B1 illustrated in FIG. 2 may further include third bottom surfaces 126 and 128.

In the case of FIG. 2, the first bottom surface 122A in the first area A1 has a curved shape, whereas the third bottom surfaces 126 and 128 in the second area A2 have a flat shape. In addition, in the case of FIG. 3, the first bottom surface 122B has a curved shape. In addition, the second bottom surface 124 illustrated in FIGs. 2 and 3 have a flat shape. However, each of the first bottom surface 122A or 122B, the second bottom surface 124, and the third bottom surfaces 126 and 128 of the embodiments is not limited to specific shapes, and may have various other shapes excluding the illustrated shapes.

The vertical separation distance between the first bottom surface 122A or 122B in the first area A1 and an imaginary horizontal plane PH may increase with decreasing distance to the optical axis 112, and may decrease with increasing distance from the optical axis 112. Here, the imaginary horizontal plane PH may mean the horizontal plane including the second bottom surface 124, or may mean the horizontal plane that extends from the second bottom surface 124 in the direction (e.g., the x-axis) intersected with the direction of the optical axis 112 (e.g., the y-axis).

In addition, a top surface 110A of the light source 110 may be located under the imaginary horizontal plane PH, without being limited thereto.

Alternatively, the top surface 110A of the light source 110 may be located above the imaginary horizontal plane PH. In this case, at least a portion of the light source 110 may be located inside the first recess R1, or the entire light source 110 may be located inside the first recess R1.

In addition, according to the embodiment, the vertical separation distance d between the deepest point P1 of the first recess R1 in the optical-axis direction (e.g., the y-axis) (or a point at which the optical axis 112 and the first bottom surface 122A or 122B intersect each other) and the light-emitting surface 110A of the light source 110 may be smaller than the width of the first recess R1 (e.g., the first width W1 that is the maximum width of the first recess R1) in the direction (e.g., the x-axis) intersected with the optical-axis direction.

Referring to FIGs. 2 and 3, a second angle θ2 means the angle between the optical axis 112 and light LP1 which is emitted from the light source 110 and introduced to the first bottom surface 122A or 122B. That is, the second angle θ2 may correspond to the divergence angle of light LP1 emitted from the light source 110 and may correspond to a half angle including 90% of the flux of light emitted from the light source 110. A third angle θ3 means the angle between the optical axis 112 and an extension line LP4 of light LP2 that is refracted at the first bottom surface 122A or 122B and directed to the top surface TS. At this time, in the embodiment, the second angle θ2 may be greater than the third angle θ3.

As described above, when the distance d is smaller than the first width W1, that is, when the second angle θ2 is greater than the third angle θ3, the light LP1, which is emitted from the light source 110 and introduced to the first bottom surface 122A or 122B of the lens 120A or 120B, may be more greatly refracted at the first bottom surface 122A or 122B, thereby being directed to the top surface TS of the lens 120A or 120B. At this time, the light LP1, reaching the top surface TS, may be reflected in the lateral direction (e.g., in the x-axis) to thereby be emitted from the lens 120A or 120B. Accordingly, a greater amount of light may be emitted in the x-axis, which is the lateral direction, than the y-axis which is the upward direction of the light emitting device 100A or 100B, thereby enabling a reduction in the thickness T1 of the lens 120A or 120B.

Meanwhile, the upper part UP of the lens 120A or 120B may include a second recess R2. The second recess R2 may be formed in the optical-axis direction so as to be opposite to the lower part LP. The top surface TS of the lens 120A or 120B may define the second recess R2 and may be tapered to the optical axis 112.

In addition, in the cases of FIGs. 2 and 3, although each of the first and second recesses R1 and R2 is illustrated as being symmetrical in the direction (e.g., the x-axis) intersected with the optical-axis direction (e.g., the y-axis) with respect to the optical axis 112, the embodiments are not limited thereto.

In addition, although the first width W1 of the first recess R1 may be smaller than the second width W2 of the second recess R2 in the direction (e.g., the x-axis) intersected with the optical-axis direction, the embodiments are not limited thereto. Here, although the width of the second recess R2 has been described as being the greatest width of the second recess R2, i.e. the second width W2 which is the width of the top surface TS of the lens 120A or 120B, the embodiments are not limited thereto.

In addition, although the side surface SS of the upper part UP and the lower part LP of the lens 120A or 120B may be flat, the embodiments are not limited thereto. That is, in another embodiment, the side surface SS may have a protrusion (not illustrated) in order to facilitate easy grip of the lens 120A or 120B in the manufacturing process of the lens 120A or 120B.

In the case of the light-emitting device 100A or 100B described above, the first bottom surface 122A or 122B serves to refract the light LP1 which is emitted from the light source 110 and introduced thereto. At this time, the first bottom surface 122A or 122B may have a first radius of curvature that is suitable for refracting the incident light LP1 toward the top surface TS of the lens 120A or 120B. In addition, the top surface TS of the lens 120A or 120B may have a second radius of curvature that is suitable for reflecting the light LP2, which is refracted by the first bottom surface 122A or 122B and introduced thereto, toward the side surface SS of the lens 120A or 120B.

That is, the light LP1 emitted from the light source 110 may be introduced to the first bottom surface 122A or 122B to thereby be refracted at the first bottom surface 122A or 122B, the light LP2 refracted at the first bottom surface 122A or 122B may be reflected by the top surface TS, and the light LP3 reflected by the top surface TS may be emitted from (or pass through) the side surface SS. As described above, the light-emitting device 100A or 100B may emit light in the lateral direction (e.g., the x-axis) intersected with the optical-axis direction (e.g., the y-axis) through the use of the lens 120A or 120B.

The light-emitting device 100A or 100B according to the above-described embodiments may be applied to various fields. For example, the light-emitting device 100A or 100B may be applied to a backlight unit.

Hereinafter, a backlight unit 200 according to an embodiment will be described with reference to the accompanying drawings.

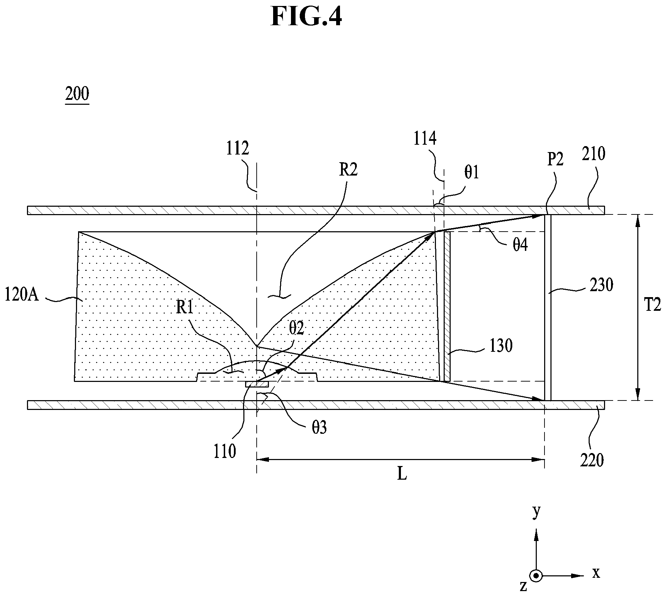

FIG. 4 is a sectional view of the backlight unit 200 according to the embodiment.

The backlight unit 200 illustrated in FIG. 4 may include the light source 110, the lens 120A, an upper plate 210, and a lower plate 220. Here, the light source 110 and the lens 120A respectively correspond to the light source 110 and the lens 120A illustrated in FIG. 2, and thus are designated by the same reference numerals. A repeated description thereof will be omitted hereinafter.

In another embodiment, the backlight unit 200 may include the lens 120B illustrated in FIG. 3 instead of the lens 120A illustrated in FIG. 2. Thus, the following description related to the backlight unit 200 may be applied in the case where the backlight unit 200 includes the lens 120B illustrated in FIG. 3.

The upper plate 210 may be disposed above the lens 120A such that light emitted from the light source 110 finally reaches the upper plate 210 after passing through the lens 120A. The upper plate 210 may have a constant thickness. For example, the upper plate 210 may include at least one of a diffuser plate, a prism sheet, or a polarizer plate.

In addition, the lower plate 220 may be disposed under the light source 110 and the lens 120A so as to support the two 120A and 110, and may have a constant thickness. The lower plate 220 may include at least one of a reflective sheet, a printed circuit board (PCB), or a radiator plate.

The separation distance T2 between the upper plate 210 and the lower plate 220 in the direction of the optical axis 112 may correspond to the thickness of the backlight unit 200. Although the thickness T2 of the backlight unit 200 may be 10 mm or less, the embodiment is not limited thereto.

The backlight unit 200 illustrated in FIG. 4 is merely given by way of example, and of course, the light-emitting devices 100A and 100B illustrated in FIGs. 2 and 3 may be applied to backlight units having different configurations from that illustrated in FIG. 4.

Meanwhile, the characteristics of the lens 120A or 120B will be described below with reference to the accompanying drawings. The following description may also be applied in the same way in the case where the backlight unit 200 illustrated in FIG. 4 adopts the lens 120B illustrated in FIG. 3 instead of the lens 120A illustrated in FIG. 2. For convenience, in order to set the target value of the intensity of light to be emitted from the side surface SS of the lens 120A, an imaginary target illuminance plane 230 is illustrated in FIG. 4. Here, the target illuminance plane 230 may be defined as a vertical plane located at a point spaced apart from the optical axis 112 by a prescribed distance L (i.e. a plane parallel to the optical axis 112). The prescribed distance L may be defined as the distance in the x-axis between the optical axis 112 and a point P2 at which the light emitted from the light source 110 reaches the upper plate 210 at an illuminance of 50% after passing through the lens 120A. In addition, the height T2 of the target illuminance plane 230 may be defined as the separation distance between the upper plate 210 and the lower plate 220.

The size of the lens 120A may be determined, for example, by using the following Equation 2, which is derived from the following Equation 1.

Equation 1

$$\pi n^2 S_C \sin^2 \theta 4 = \pi n^2 S_L \sin^2 \theta 2$$

Equation 2

$$S_L = S_C \frac{\sin^2 \theta 2}{\sin^2 \theta 4}$$

Here, n is the index of refraction of a medium, $S_L$ is the area of an orthographic projection plane 130 which is acquired by projecting the lens 120A in the direction (e.g., the x-axis) intersected with the optical-axis direction (e.g., the y-axis) with reference to FIGs. 1A and 4, $S_C$ is the light-emitting area of the light source 110, and the fourth angle θ4 is the radiation angle of light emitted from the lens 120A. Specifically, the fourth angle θ4 may be half of the radiation angle observed when light emitted from the orthographic projection plane 130 is introduced to the target illuminance plane 230.

$S_L$ may be represented by the following Equation 3 through the use of Equation 1 and Equation 2.

Equation 3

$$S_L = T1 \times W3$$

Here, W3 is the third width of the lens 120A in the Z-axis with reference to FIG. 1A. The height T1 of the orthographic projection plane 130 corresponds to the thickness of the lens 120A in the optical-axis direction. It will be appreciated that the area $S_L$ of the orthographic projection plane 130, i.e. the size of the lens 120A is determined by the height T1 and the third width W3 in the Z-axis which is perpendicular to the optical-axis direction.

Although the fourth angle θ4 described above is proportional to the height (or thickness) T2 of the target illuminance plane 230, but may be inverse-proportional to the prescribed distance L between the target illuminance plane 230 and the optical axis 112. The fourth angle θ4 may be within a range from 1° to 15°, and for example, may be within a range from 3° to 12° and, more particularly, may be within a range from 4.5° to 8.5°.

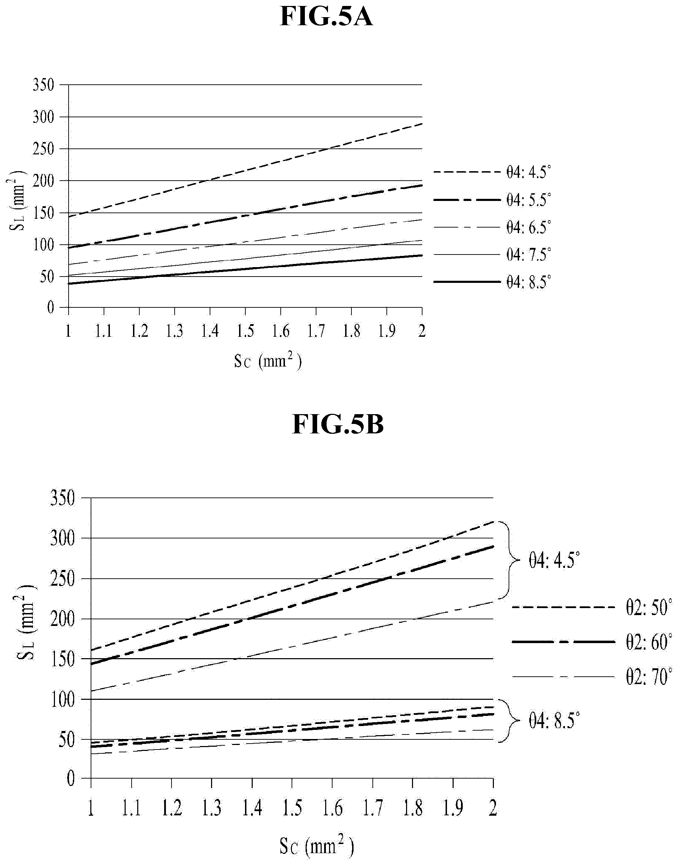

FIGs. 5A and 5B are graphs illustrating the area $S_L$ of the orthographic projection plane 130 relative to the area $S_C$ of the light source 110. The horizontal axis represents $S_C$, and the vertical axis represents $S_L$.

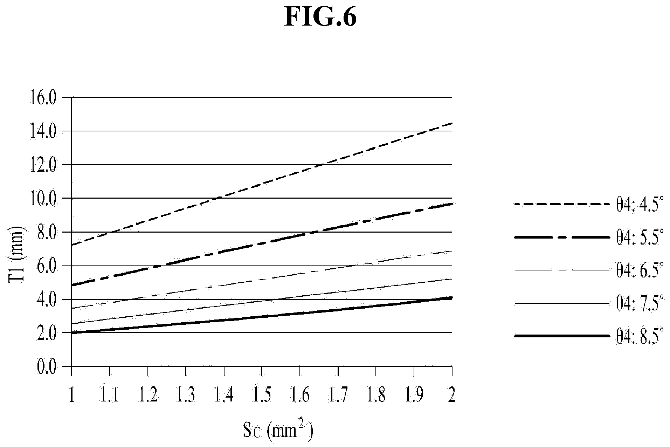

FIG. 6 is a graph illustrating the height (or thickness) T1 of the lens 120A relative to the area $S_C$ of the light source 110. The horizontal axis represents $S_C$, and the vertical axis represents the thickness T1 corresponding to the height of the lens 120A.

The relationship between $S_C$ and $S_L$ according to variation in the fourth angle θ4 will be appreciated with reference to FIG. 5A, and the relationship between $S_C$ and $S_L$ according to variation in the second and fourth angles θ2 and θ4 will be appreciated with reference to FIG. 5B.

Referring to FIGs. 5A and 5B, it will be appreciated that $S_L$ increases as $S_C$ increases. Accordingly, it will be appreciated that it is necessary to increase the size of the lens 120A as the light-emitting area $S_C$ of the light source 110 increases. That is, as exemplarily illustrated in FIG. 6, it will be appreciated that the thickness T1 of the lens 120A increases as the light-emitting area $S_C$ of the light source 110 increases. Accordingly, in the embodiment, the light-emitting area $S_C$ of the light source 110 may decrease in order to decrease the thickness T1 of the lens 120A.

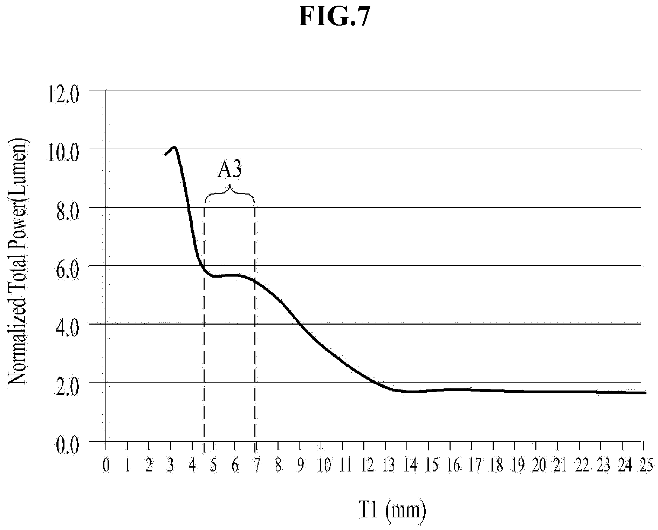

FIG. 7 is a graph illustrating normalized total power (or intensity of radiation) relative to the thickness T1 of the lens 120A. The horizontal axis represents the thickness of the lens 120A, and the vertical axis represents the normalized total power.

The thickness T1 of the lens 120A may be appropriately selected according to the thickness T2 of the backlight unit 200. At this time, it will be appreciated with reference to FIG. 7 that the intensity of light emitted from the light-emitting device 100A or 100B or the backlight unit 200, i.e. the total power is changed based on the thickness T1 of the lens 120A. Accordingly, the thickness T1 of the lens 120A may be selected from a range A3 in which variation in normalized total power is small. The thickness T1 of the lens 120A may decrease, for example, to a range from 4.5 mm to 7 mm, while achieving minimum variation in normalized total power.

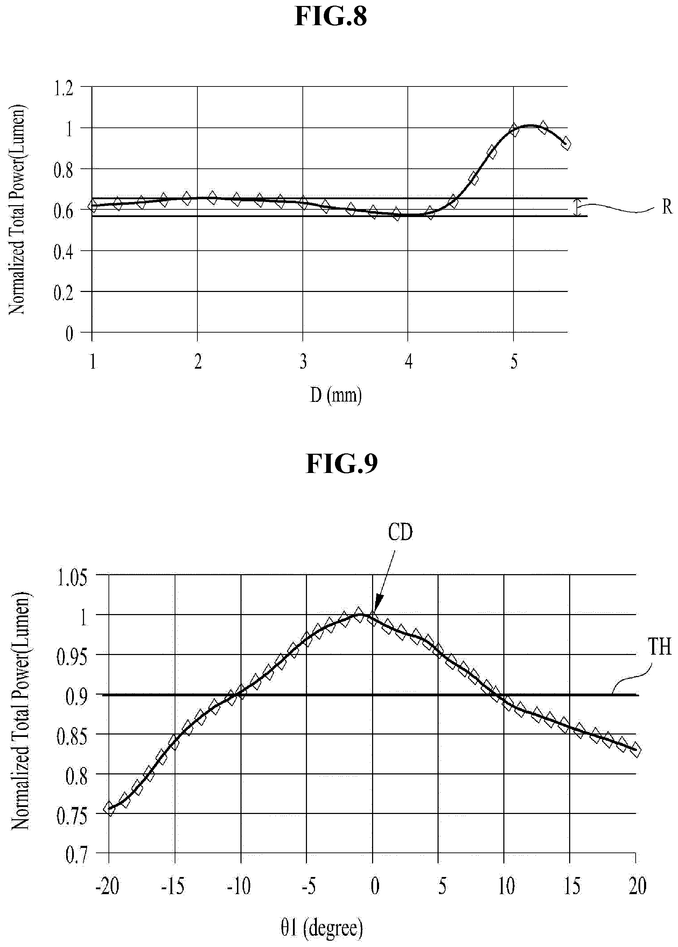

FIG. 8 is a graph illustrating normalized total power (or intensity of radiation) relative to the separation distance D between the first and second recesses R1 and R2 in the direction of the optical axis 112. The horizontal axis represents the separation distance D, and the vertical axis represents the normalized total power.

The first and second recesses R1 and R2 may have the greatest depth on the optical axis 112, and may control the intensity of radiation of light emitted in the y-axis, which is the upward direction of the lens 120A, according to the separation distance D at the optical axis 112 between the first recess R1 and the second recess R2. The intensity of radiation of light emitted from the side surface SS of the lens 120A decreases as the normalized total power increases, which may cause deterioration in the performance of the light-emitting device 100A or 100B or the backlight unit 200 including the same. In consideration of this, the separation distance D may be selected from a range in which variation in normalized total power is small. For example, it will be appreciated with reference to FIG. 8 that the separation distance D may be within a range from 1 mm to 4.7 mm, which corresponds to the range R in which variation in normalized total power is small. When the separation distance D is set to this value, the thickness T1 of the lens 120A may decrease.

FIG. 9 is a graph illustrating normalized total power (or intensity of radiation) relative to the first angle θ1. The horizontal axis represents the first angle θ1, and the vertical axis represents the normalized total power. Here, CD is the change point of the first angle θ1.

Since the intensity of radiation of light emitted from the side surface SS is controlled according to the first angle θ1 of the inclined side surface SS of the lens 120A, the first angle θ1 may be selected from a range in which the total intensity of radiation has a high value. Referring to FIG. 9, the first angle θ1 may be determined so as to be higher than the threshold range TH in which the total intensity of radiation is 90% or more. The first angle θ1 may be, for example, within a range from -10° to +10°, in order to increase the total power which is the intensity of radiation of light emitted from the light-emitting device 100A when the thickness T1 of the lens 120A is reduced.

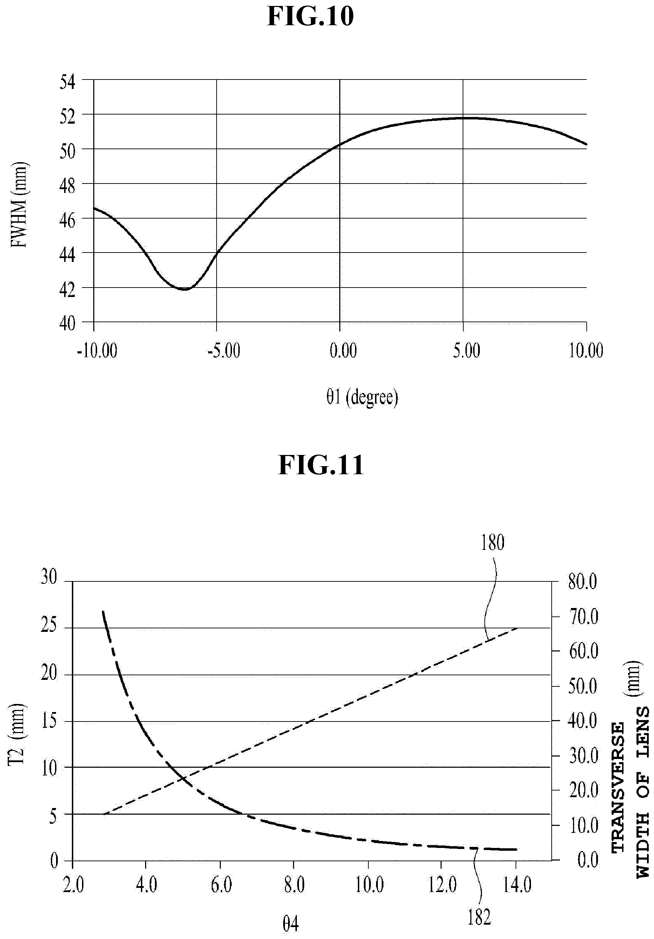

FIG. 10 is a graph illustrating the full width at half maximum (FWHM) relative to the first angle θ1. The horizontal axis represents the first angle θ1, and the vertical axis represents the full width at half maximum (FWHM).

The full width at half maximum (FWHM) is related to the separation distance L between the target illuminance plane 230 and the optical axis 112. In addition, the full width at half maximum (FWHM) may play a crucial role in determining the distance L in the backlight unit 200, and may require a value of 50 mm or more. Referring to FIG. 10, it will be appreciated that the first angle θ1 having the full width at half maximum of 50 mm or more has a positive value rather than a negative value. In consideration of this, the first angle θ1 may be within a range from 0° to 10°. Accordingly, in the embodiment, as exemplarily illustrated in FIG. 3, the full width at half maximum (FWHM) may increase as the first angle θ1 of the inclined side surface SS of the lens 120B is adjusted to have a positive value.

FIG. 11 is a graph illustrating the thickness T2 of the backlight unit 200 relative to the fourth angle θ4. The horizontal axis represents the fourth angle θ4, the left vertical axis represents the thickness T2, and the right vertical axis represents the transverse width of the lens 120A.

The smaller fourth angle θ4 allows light to spread farther in the x-axis which is the lateral direction of the lens 120A, which is advantageous in reducing the thickness T2 (also designated by reference numeral 180) of the backlight unit 200. However, the lens 120A requires a great area in order to spread light farther in the lateral direction thereof. At this time, when the transverse width (e.g., W3) (also designated by reference numeral 182) of the lens 120A increases, it is not necessary to increase the height of the lens 120A, and therefore the thickness T2 of the backlight unit 200 may relatively decrease. Referring to FIG. 11, it will be appreciated that the thickness T2(also designated by reference numeral 180) of the backlight unit 200 and the transverse width 182 of the lens 120A vary differently according to variation in the fourth angle θ4.

As described above, by varying the characteristics (e.g., d, D, W1, W3, θ1, θ4, and T1) of the lens 120A or 120B in the light-emitting device 100A or 100B, not only the thickness T1 or T2 of the light-emitting device 100A or 100B or the backlight unit 200 may decrease but also the full width at half maximum may increase, which may ensure even illuminance of the light to be emitted.

The above-described backlight unit may be applied to various fields. For example, the backlight unit may be applied to a display apparatus.

Hereinafter, a display apparatus according to an embodiment will be described with reference to the accompanying drawing.

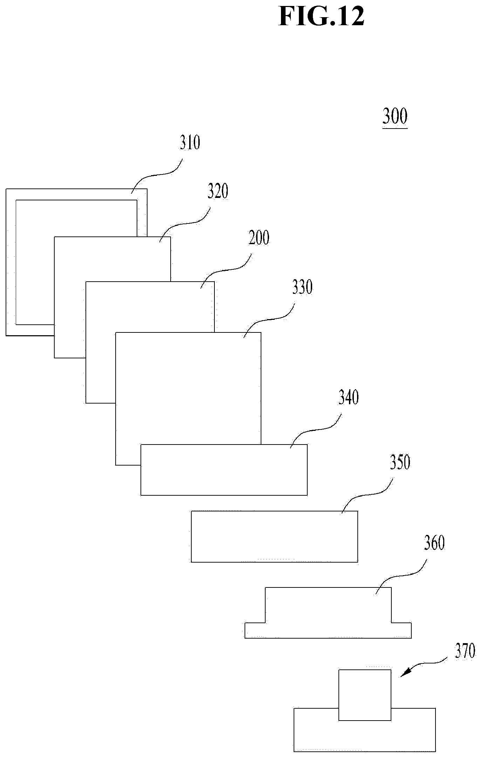

FIG. 12 is a perspective view schematically illustrating the display apparatus 300 according to the embodiment.

The display apparatus 300 illustrated in FIG. 12 may include a front frame 310, a display panel 320, the backlight unit 200, a first back cover 330, a controller frame 340, a sub-controller 350, a second back cover 360, and a control module 370.

The front frame 310 serves to surround the front surface of the display panel 320. The front frame 310 defines the external appearance of the front surface at the rim portion which is a non-display area of the display apparatus 300, i.e. a bezel area. That is, the width of the front frame 310 may be the width of the bezel area.

The display panel 320 is disposed at the upper side of the backlight unit 200. The display panel 320 may include a lower substrate (not illustrated) and an upper substrate (not illustrated), which are bonded to face each other so as to maintain an even cell gap therebetween, and a liquid crystal layer (not illustrated) interposed between the two substrates. The lower substrate may be formed with a plurality of gate lines and a plurality of data lines intersecting the data lines. Thin film Transistors (TFTs) may be formed at the intersections of the gate lines and the data lines.

The backlight unit 200 serves to emit light so as to provide the display panel 320 with background light. The backlight unit 200 may correspond to the backlight unit 200 illustrated in FIG. 4. In this case, the upper plate 210 of the backlight unit 200 illustrated in FIG. 4 may include, as described above, a plurality of optical sheets to diffuse or process light emitted toward the display panel 320, for example, a diffuser sheet and a prism sheet.

The first back cover 330 is configured to surround the back of the backlight unit 200 so as to define the external appearance of the back surface of the display apparatus 300.

The sub-controller 350 is fixed to the lower end of the back surface of the first back cover 330 and serves to drive the display apparatus 300 upon receiving supply power and image signals from the control module 370. The sub-controller 350 serves to drive the display panel 320 and the backlight unit 200 upon receiving the image signals. The sub-controller 350 is formed to the minimum size so as to be disposed between the first and second back covers 330 and 360. In this case, the controller frame 340 may provide a fixed position for the sub-controller 350, and the sub-controller 350 may be covered with the second back-cover 360 fixed to the back surface of the first back cover 330.

The control module 370 may include a power supply unit (not illustrated) which receives external power and converts the received power into drive power required to drive the display apparatus 300, and a main controller (not illustrated) which generates image signals required to drive the display apparatus 300.

The display apparatus 300 illustrated in FIG. 12 is merely given by way of example, and of course, the backlight unit 200 illustrated in FIG. 4 may be applied to display apparatuses having configurations different from that illustrated in FIG. 12.

As is apparent from the above description, according to the embodiments, a light-emitting device, a backlight unit including the device, and a display apparatus including the unit may have not only small thicknesses but also great full widths at half maximum, which may ensure even illuminance of light to be emitted.

Although embodiments have been described with reference to a number of illustrative embodiments thereof, it should be understood that numerous other modifications and embodiments can be devised by those skilled in the art that will fall within the principles of this disclosure. More particularly, various variations and modifications are possible in the component parts and/or arrangements of the subject combination arrangement within the scope of the disclosure and the drawings. The invention is defined in the appended claims. In addition to variations and modifications in the component parts and/or arrangements, alternative uses will also be apparent to those skilled in the art.

**Claims**

1. A light-emitting device (100A, 100B), comprising:

   a light source (110); and
   a lens (120A, 120B) disposed above the light source,
   wherein the lens (120A, 120B) includes:

      a lower part (LP) having a first recess (R1) formed in an optical-axis direction so as to face the light source (110); and
      an upper part (UP) having a second recess (R2) formed in the optical-axis direction so as to be opposite to the lower part,
      wherein the first recess (R1) and the second recess (R2) are spaced apart from each other by a separation distance (D) within a range from 1 mm to 4.7 mm on an optical-axis,_
      wherein a side surface (SS) of the lower part (LP) and the upper part (UP) includes an inclination angle ($\theta$1) within a range from -10° to +10° with respect to an imaginary vertical line parallel to the optical-axis (112),
      wherein the lens has a thickness (T1) within a range from 4.5 mm to 7 mm,_
      wherein the side surface (SS) is flat,
      wherein the first recess (R1) and the second recess (R2) are symmetrical with respect to the optical-axis in a direction intersected with the optical-axis,
      wherein the lower part (LP) includes:

         a first bottom portion having a first bottom surface (122A, 122B) defining the first recess (R1); and
         a second bottom portion adjacent to the first bottom portion, the second bottom portion having a second bottom surface (124),
         wherein the first bottom surface (122A, 122B) has a first radius of curvature suitable for refracting light emitted from the light source (110) and introduced thereto, toward a top surface (TS) of the lens defining the second recess (R2),
         wherein the top surface (TS) of the lens has a second radius of curvature suitable for reflecting the light refracted at the first bottom surface (122A, 122B) toward side surface (SS) of the lens, wherein a second angle ($\theta2$) is 50°, 60°, or 70°, the second angle ($\theta2$) being an angle between the optical axis (112) and the light emitted from the light source (110) and introduced to the first bottom surface,

wherein a fourth angle ($\theta4$) is within a range from 1° to 15°, the fourth angle ($\theta4$) being a half of the radiation angle observed when light emitted from an orthographic projection plane (130) is introduced to a target illuminance plane (230),

wherein the orthographic projection plane (130) is acquired by projecting the lens in the direction intersected with the optical-axis,

wherein the target illuminance (230) plane is defined as a vertical plane located at a point spaced apart by a prescribed distance (L) in the direction intersected with the optical-axis from the optical axis, and

wherein the prescribed distance (L) is defined as an distance in the direction intersected with the optical-axis between the optical-axis and a point at which the light emitted from the light source reaches an upper plate (210) at an illuminance of 50% after passing through the lens.

2.  The device according to claim 1, wherein the inclination angle ($\theta1$) of the side surface (SS) is within a range from 0° to 10°.

3.  The device according to any one of claims 1 or 2, wherein the first recess (R1) has a maximum width smaller than a maximum width of the second recess (R2) in the direction intersected with the optical-axis direction.

4.  The device according to any one of claims 1 to 3, wherein a distance between a deepest point of the first recess (R1) and a light-emitting surface of the light source (110) in the optical-axis is smaller than a maximum width of the first recess (R1) in the direction intersected with the optical-axis direction.

5.  The device according to any one of claims 1 to 4, wherein the first recess (R1) includes:

    a first area (A1) having an increasing depth with decreasing distance to the optical-axis; and
    a second area (A2) located around the perimeter of the first area, the second area having a constant depth.

6.  The device according to any one of claims 1 to 5, wherein the light source (110) has a top surface located under an imaginary horizontal plane extending from the second bottom surface (124).

7.  A backlight unit (200), comprising:

    the light-emitting device (100A, 100B) according to any one of claims 1 to 6;
    an upper plate (210) disposed above the lens (100A, 100B); and
    a lower plate (220) disposed under the light source and the lens.

8.  The unit according to claim 7, wherein the upper plate (210) includes at least one of a diffuser plate, a prism sheet, or a polarizer plate.

9.  The unit according to claim 7 or 8, wherein the lower plate (220) includes at least one of a reflective sheet, a printed circuit board, or a radiator plate.

10. A display apparatus, comprising:

    the backlight unit (200) according to any one of claims 7 to 9; and
    a display panel (320) disposed at an upper side of the backlight unit.

**Patentansprüche**

1.  Lichtemittierende Vorrichtung (100A, 100B), die aufweist:

    eine Lichtquelle (110), und
    eine Linse (120A, 120B), die über der Lichtquelle angeordnet ist,
    wobei die Linse (120A, 120B) umfasst:

    einen unteren Teil (LP) mit einer ersten Aussparung (R1), die in einer optischen Achsenrichtung ausgebildet ist, so dass sie der Lichtquelle (110) zugewandt ist; und
    einen oberen Teil (UP) mit einer zweiten Aussparung (R2), die in der optischen Achsenrichtung derart ausgebildet ist, so dass sie zu dem unteren Teil entgegengesetzt ist,
    wobei die erste Aussparung (R1) und die zweite Aussparung (R2) um einen Trennungsabstand (D) in einem Bereich von 1 mm bis 4,7 mm auf einer optischen Achse voneinander beabstandet sind,
    wobei eine Seitenoberfläche (SS) des unteren Teils (LP) und des oberen Teils (UP)

einen Neigungswinkel ($\theta 1$) in einem Bereich von -10° bis +10° in Bezug auf eine imaginäre vertikale Linie parallel zu der optischen Achse (112) umfasst,

wobei die Linse eine Dicke (T1) in einem Bereich von 4,5 mm bis 7 mm hat,

wobei die Seitenoberfläche (SS) flach ist,

wobei die erste Aussparung (R1) und die zweite Aussparung (R2) in Bezug auf die optische Achse in einer Richtung, die sich mit der optischen Achse schneidet, symmetrisch sind,

wobei der untere Teil (LP) umfasst:

einen ersten unteren Abschnitt mit einer ersten unteren Oberfläche (122A, 122B), welche die erste Aussparung (R1) definiert; und

einen zweiten unteren Abschnitt benachbart zu dem ersten unteren Abschnitt, wobei der zweite untere Abschnitt eine zweite untere Oberfläche (124) hat,

wobei die erste untere Oberfläche (122A, 122B) einen ersten Krümmungsradius hat, der geeignet ist, um Licht, das von der Lichtquelle (110) emittiert und in sie eingeführt wird, in Richtung einer oberen Oberfläche (TS) der Linse, welche die zweite Aussparung (R2) definiert, zu brechen,

wobei die obere Oberfläche (TS) der Linse einen zweiten Krümmungsradius hat, der geeignet ist, um das an der ersten unteren Oberfläche (122A, 122B) gebrochene Licht in Richtung der Seitenoberfläche (SS) der Linse zu reflektieren,

wobei ein zweiter Winkel ($\theta 2$) 50°, 60° oder 70° ist, wobei der zweite Winkel ($\theta 2$) ein Winkel zwischen der optischen Achse (112) und dem Licht, das von der Lichtquelle (110) emittiert und zu der ersten unteren Oberfläche eingeführt wird, ist,

wobei ein vierter Winkel ($\theta 4$) in einem Bereich von 1° bis 15° ist, wobei der vierte Winkel ($\theta 4$) eine Hälfte des Strahlungswinkels ist, der beobachtet wird, wenn das Licht das von einer senkrechten Projektionsebene (130) emittiert wird, zu einer Zielbeleuchtungsebene (230) eingeführt wird,

wobei die senkrechte Projektionsebene (130) durch Projizieren der Linse in der Richtung, die sich mit der optischen Achse schneidet, erlangt wird,

wobei die Zielbeleuchtungsebene (230) als eine vertikale Ebene definiert ist, die an einem Punkt angeordnet ist, der um einen vorgeschriebenen Abstand (L) in der Richtung, die sich mit der optischen Achse schneidet, von der optischen Achse beabstandet ist, und wobei der vorgeschriebene Abstand (L) als ein Abstand in der Richtung, die sich mit der optischen Achse schneidet, zwischen der optischen Achse und einem Punkt, an dem das von der Lichtquelle emittierte Licht eine obere Platte (210) mit einer Lichtintensität von 50% erreicht, nachdem es die Linse durchlaufen hat, definiert ist.

2.  Vorrichtung nach Anspruch 1, wobei der Neigungswinkel ($\theta 1$) der Oberfläche (SS) in einem Bereich von 0° bis 10° liegt.

3.  Vorrichtung nach einem der Ansprüche 1 oder 2, wobei die erste Aussparung (R1) eine maximale Breite hat, die kleiner als eine maximale Breite der zweiten Aussparung (R2) in der Richtung ist, die sich mit der optischen Achsenrichtung schneidet.

4.  Vorrichtung nach einem der Ansprüche 1 bis 3, wobei ein Abstand zwischen einem tiefsten Punkt der ersten Aussparung (R1) und einer lichtemittierenden Oberfläche der Lichtquelle (110) in der optischen Achse kleiner als eine maximale Breite der ersten Aussparung (R1) in der Richtung, die sich mit der optischen Achsenrichtung schneidet, ist.

5.  Vorrichtung nach einem der Ansprüche 1 bis 4, wobei die erste Aussparung (R1) umfasst:

einen ersten Bereich (A1), der eine mit zunehmendem Abstand zur optischen Achse zunehmende Tiefe hat; und
einen zweiten Bereich (A2), der um den Umfang des ersten Bereichs angeordnet ist, wobei der zweite Bereich eine konstante Tiefe hat.

6.  Vorrichtung nach einem der Ansprüche 1 bis 5, wobei die Lichtquelle (110) eine obere Oberfläche hat, die unter einer imaginären horizontalen Ebene angeordnet ist, die sich von der zweiten unteren Oberfläche (124) erstreckt.

7.  Rückbeleuchtungseinheit (200), die aufweist:

die lichtemittierende Vorrichtung (100A, 100B) nach einem der Ansprüche 1 bis 6;
eine obere Platte (210), die über der Linse (100A, 100B) angeordnet ist; und
eine untere Platte (220), die unter der Lichtquelle und der Linse angeordnet ist.

**8.** Einheit nach Anspruch 7, wobei die obere Platte (210) eine Streuplatte und/oder eine Prismenschicht und/oder eine Polarisatorplatte umfasst.

**9.** Einheit nach Anspruch 7 oder 8, wobei die untere Platte (220) eine reflektierende Schicht und/oder eine Leiterplatte und/oder eine Strahlerplatte umfasst.

**10.** Anzeigevorrichtung, die aufweist:

eine Rückbeleuchtungseinheit (200) nach einem der Ansprüche 7 bis 9; und
ein Anzeigefeld (320), das auf einer Oberseite der Rückbeleuchtungseinheit angeordnet ist.

**Revendications**

**1.** Dispositif électroluminescent (100A, 100B), comprenant :

une source de lumière (110) ; et
une lentille (120A, 120B) disposée au-dessus de la source de lumière,
dans lequel la lentille (120A, 120B) comporte :

une partie inférieure (LP) ayant un premier évidement (R1) formé dans une direction d'axe optique de sorte à faire face à la source de lumière (110) ;
et
une partie supérieure (UP) ayant un second évidement (R2) formé dans la direction d'axe optique de sorte à être opposé à la partie inférieure,
dans lequel le premier évidement (R1) et le second évidement (R2) sont espacés l'un de l'autre par une distance de séparation (D) dans une plage allant de 1 mm à 4,7 mm sur un axe optique,
dans lequel une surface latérale (SS) de la partie inférieure (LP) et de la partie supérieure (UP) comporte un angle d'inclinaison ($\theta$1) dans une plage allant de -10° à +10° par rapport à une ligne verticale imaginaire parallèle à l'axe optique (112), dans lequel la lentille a une épaisseur (T1) dans une plage allant de 4,5 mm à 7 mm,
dans lequel la surface latérale (SS) est plate,
dans lequel le premier évidement (R1) et le second évidement (R2) sont symétriques par rapport à l'axe optique dans une direction coupant l'axe optique,
dans lequel la partie inférieure (LP) comporte :

une première portion de fond ayant une première surface de fond (122A, 122B) définissant le premier évidement (R1) ;
et
une seconde portion de fond adjacente à la première portion de fond, la seconde portion de fond ayant une seconde surface de fond (124),
dans lequel la première surface de fond (122A, 122B) a un premier rayon de courbure approprié pour réfracter la lumière émise depuis la source de lumière (110) et introduite à celle-ci, vers une surface supérieure (TS) de la lentille définissant le second évidement (R2),
dans lequel la surface supérieure (TS) de la lentille a un second rayon de courbure approprié pour réfléchir la lumière réfractée au niveau de la première surface de fond (122A, 122B) vers la surface latérale (SS) de la lentille,
dans lequel un deuxième angle ($\theta$2) est de 50°, 60°, ou 70°, le deuxième angle ($\theta$2) étant un angle compris entre l'axe optique (112) et la lumière émise de la source de lumière (110) et introduite à la première surface de fond,
dans lequel un quatrième angle ($\theta$4) est dans une plage allant de 1° à 15°, le quatrième angle ($\theta$4) faisant une moitié de l'angle de rayonnement observé lorsque la lumière émise d'un plan de projection orthographique (130) est introduite à un plan d'éclairement cible (230).
dans lequel le plan de projection orthographique (130) est acquis par une projection de la lentille dans la direction coupant l'axe optique,
dans lequel le plan d'éclairement cible (230) est défini comme un plan vertical situé à un point espacé de l'axe optique par d'une distance prescrite (L) dans la direction coupant l'axe optique, et
dans lequel la distance prescrite (L) est définie comme une distance dans la direction coupant l'axe optique entre l'axe optique et un point au niveau duquel la lumière émise depuis la source de lumière atteint une plaque supérieure (210) à un éclairement de 50 % après le passage à travers la lentille.

**2.** Dispositif selon la revendication 1, dans lequel l'angle d'inclinaison ($\theta$1) de la surface latérale (SS) est dans une plage allant de 0° à 10°.

**3.** Dispositif selon l'une quelconque des revendications 1 ou 2, dans lequel le premier évidement (R1) a une largeur maximale inférieure à une largeur maximale du second évidement (R2) dans la direction coupant la direction d'axe optique.

4. Dispositif selon l'une quelconque des revendications 1 à 3, dans lequel une distance entre un point le plus profond du premier évidement (R1) et une surface électroluminescente de la source de lumière (110) dans l'axe optique est inférieure à une largeur maximale du premier évidement (R1) dans la direction coupant la direction d'axe optique.

5. Dispositif selon l'une quelconque des revendications 1 à 4, dans lequel le premier évidement (R1) comporte :

   une première zone (A1) ayant une profondeur qui augmente à mesure qu'une distance de l'axe optique diminue ; et
   une seconde zone (A2) située autour du périmètre de la première zone, la seconde zone ayant une profondeur constante.

6. Dispositif selon l'une quelconque des revendications 1 à 5, dans lequel la source de lumière (110) a une surface supérieure située sous un plan imaginaire horizontal s'étendant depuis la seconde surface de fond (124).

7. Unité de rétroéclairage (200), comprenant :

   le dispositif électroluminescent (100A, 100B) selon l'une quelconque des revendications 1 à 6 ;
   une plaque supérieure (210) disposée au-dessus de la lentille (100A, 100B) ; et
   une plaque inférieure (220) disposée sous la source de lumière et la lentille.

8. Unité selon la revendication 7, dans laquelle la plaque supérieure (210) comporte au moins l'une parmi une plaque diffusante, une feuille de prisme, ou une plaque polarisante.

9. Unité selon la revendication 7 ou 8, dans laquelle la plaque inférieure (220) comporte au moins l'une parmi une feuille réfléchissante, une carte de circuit imprimé, ou une plaque de radiateur.

10. Appareil d'affichage, comprenant :

   l'unité de rétroéclairage (200) selon l'une quelconque des revendications 7 à 9 ; et
   un panneau d'affichage (320) disposé au niveau d'un côté supérieur de l'unité de rétroéclairage.

# FIG.1A

# FIG.1B

# FIG.2

# FIG.3

100B

# FIG.4

# FIG.5A

# FIG.5B

# FIG.6

# FIG.7

# FIG.8

# FIG.9

# FIG.10

# FIG.11

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013088857 A
- KR 20140050860
- US 2006091429 A
- KR 20140089318